# EUROPEAN PATENT APPLICATION

(11) **EP 2 466 931 A2**
(43) Date of publication of application: **20.06.2012**
(21) Application number: 11173583.3
(22) Date of filing: 12.07.2011
(51) Int. Cl.: H04W 4/18

(54) **Mobile communication terminal and method for content processing**

(30) Priority: 29.07.2010 KR 20100073202
(71) Applicant: Pantech Co., Ltd., Seoul 121-792 (KR)
(72) Inventor: Kim, Sung Jin, 121-792 Seoul (KR)
(74) Representative: Herzog, Markus

(57) **Abstract**

A mobile communication terminal and a method of processing content thereof are disclosed. The terminal and method analyze inputted commands to generate condition data used to automatically executed the inputted commands when the condition for the command occurs. The mobile communication terminal includes a pre-work setting unit (110) to set a combination condition which includes a search condition, a predetermined-operation identification information, and source data; a condition variation monitoring unit (130) to monitor whether an actual condition satisfies the search condition, and a post-processing management unit (120) to process the source data, if the actual condition satisfies the search condition, and to execute a predetermined operation according to the predetermined-operation identification information, if the actual condition satisfies the search condition.

## Description

### CROSS-REFERENCE TO RELATED APPLICATION

This application claims priority and benefit to Korean Patent Application No. 10-2010-0073202, filed on July 29, 2010, which is incorporated by reference for all purposes as if fully set forth herein.

### BACKGROUND

FIELD

The following description relates to an apparatus including a mobile communication terminal for content processing and a method for processing content.

DISCUSSION OF THE BACKGROUND

With the advent of digital communications technology, mobile communication terminals have been developed. The functions provided by mobile communication terminal have increased to include, in addition to basic telephonic functions, various services, such as a camera function, a message transmission/reception function, an Internet function, a moving image player function and a navigation function. Recently, with the advent of a smart phone or the like, the number of interfaces (e.g. Wi-Fi®, Bluetooth®, etc.) provided to mobile communication terminals have increased, thus increasing data communication capabilities of the mobile communication terminals.

Most services provided by mobile communication terminals utilize content, such as text, music, movies or photos. In order to utilize the content, a series of procedures for processing the content are necessary. These procedures require user input.

For example, a user may follow the following procedure in order to use the camera function of a mobile communication terminal. The user takes a photo using a camera mounted in the mobile communication terminal, stores the photo, transfers the photo in the terminal to a computer through a USB port at home, uploads the photo to a specific website, and writes about the place where the photo was taken.

However, a user may forget the order of operations to be performed or to make errors while performing the operations. In addition, due to time or space constraints, user convenience is decreased.

### SUMMARY

Exemplary embodiments of the present invention provide a mobile communication terminal, in which a content processing procedure is automated so as to respond to a variation in the condition of the terminal, and a method for processing content thereof.

Additional features of the invention will be set forth in the description which follows, and in part will be apparent from the description, or may be learned by practice of the invention.

An exemplary embodiment of the present invention discloses a mobile communication terminal including: a pre-work setting unit to set a combination condition the combination condition comprising including a search condition, predetermined-operation identification information, and source data; a condition variation monitoring unit to monitor whether an actual condition satisfies the search condition; and a post-processing management unit to process the source data if the actual condition satisfies the search condition and to execute a predetermined operation according to the predetermined-operation identification information.

An exemplary embodiment of the present invention also discloses a method for processing content of a mobile communication terminal, the method including: performing a pre-work operation of setting a combination condition wherein the combination condition comprises source data, a search condition and predetermined-operation identification information; performing a condition detecting operation of monitoring whether an actual condition satisfies the search condition; and if the actual condition satisfies the search condition, performing a post-processing operation of processing the source data and executing an operation according to the predetermined-operation identification information.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram of a configuration of a mobile communication terminal according to an exemplary embodiment.

FIG. 2 is a diagram of a table depicting an illustrative operation of a pre-work setting unit according to an exemplary embodiment.

FIG. 3(a) and FIG. 3(b) are diagrams of tables depicting an illustrative operation of a pre-work setting unit according to an exemplary embodiment.

FIG. 4 is a flowchart depicting an illustrative method for processing content according to an exemplary embodiment.

FIG. 5 is a flowchart depicting an illustrative method for processing source data and executing a predetermined operation according to an exemplary embodiment.

FIG. 6 depicts an exemplary data format for standard information according to an exemplary embodiment.

FIG. 7 depicts an exemplary constructed data stream for transmission according to an exemplary embodiment.

### DETAILED DESCRIPTION

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

The terminology used herein is for the purpose of describing particular embodiments only and is not intended to be limiting of this disclosure. As used herein, the singular forms "a," "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first," "second," and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising," or "includes" and/or "including" when used in this specification, specify the presence of stated features, regions, integers, operations, operations, elements, and/or components, but do not preclude the presence or addition of one or more other features, regions, integers, operations, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

A mobile communication terminal may perform a pre-work operation of defining a condition, performs an operation of monitoring whether or not the condition is satisfied, and performs a post-processing operation when the condition is satisfied. The mobile communication terminal may collect data from a local device or an external device accessible through various interfaces such as Wi-Fi® or Bluetooth® and stores the data in a database. In addition, the mobile communication terminal may combine the collected data and may automatically perform a data generating, editing, storing, uploading, transmitting, receiving, and/or converting operation using the combined data, without a manual editing or storage operation of a user, when a specific condition is satisfied, thereby providing user convenience.

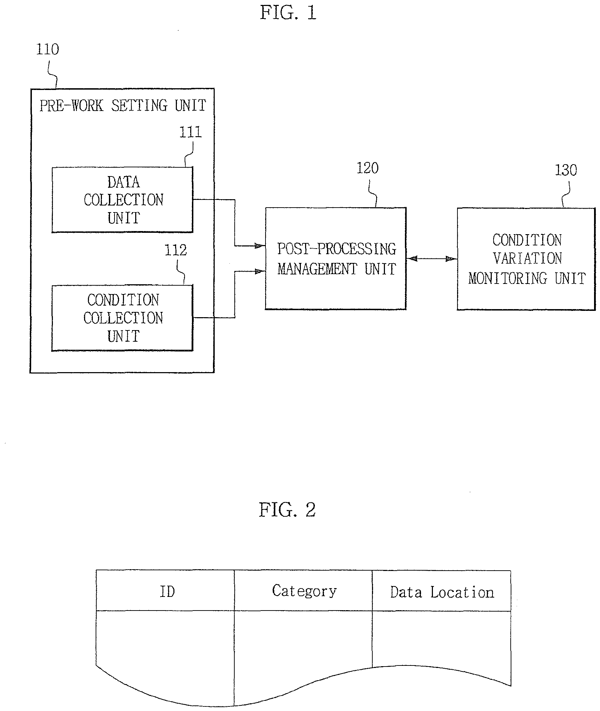

FIG. 1 is a diagram of a configuration of a mobile communication terminal according to an exemplary embodiment.

The mobile communication terminal includes a pre-work setting unit 110, a post-processing management unit 120, and a condition variation monitoring unit 130.

The pre-work setting unit 110 generates source data (for example text, a photo, a moving image, or the like) and transfers the source data and a combination condition to the post-processing management unit 120. In an exemplary embodiment, the pre-work setting unit 110 may transfer the source data based on a user's input. The pre-work setting unit 110 may include a data collection unit 111 and a condition collection unit 112. The combination condition includes a search condition (e.g., a time, a space, etc.), which is a prerequisite for post-processing, and predetermined-operation identification information for specifying a predetermined operation (e.g. a data generating operation, an editing operation, a transmission operation, an uploading operation, etc.) to be automatically performed as post-processing, if the search condition is satisfied.

Although, the source data and the combination condition of the pre-work operation described above are generated according to user input, the present disclosure is not limited thereto and the source data and the combination condition may be generated and set in other manners. For example, the combination condition may be in development of an application installed in the mobile communication terminal instead of the user or may be generated according to the characteristics of the source data.

The data collection unit 111 obtains the source data (e.g., text, photo, moving image, etc.) selected or generated by the user, stores the source data in a database, and transfers the source data to the post-processing management unit 120. The source data may be classified into various categories. The data collection unit 111 may assign source data IDs based on the categories.

The data collection unit 111 may analyze source data selected by the user and divide the analyzed source data into categories and sub-categories. For example, FIG. 2 depicts an exemplary table for storing source data. The data collection unit 111 classifies the source data selected by the user for the post-processing to be performed if the condition is satisfied according to categories, and stores the classified source data. In an exemplary embodiment, the categories may be: multimedia (0x01), text (0x02), location data (0x03), and application data (0x04). The sub-categories of multimedia (0x01) may be: photo (0x01), music (0x02), moving image (0x03), etc. The sub-categories of text (0x02) may be document (0x01), e-book (0x02), phone-book (0x03), etc. The sub-categories of location data (0x03) may be GPS (0x01), etc. The sub-categories of application data (0x04) may be possessed application (0x01), etc.

The data collection unit 111 populates the table shown in FIG. 2 based on the categories. In FIG. 2, the "ID" entries have certain values that are different from each other. The "Category" entries have values that correspond to the above-described categories and sub-categories. A "Category" entry is set and a 4-byte value is generated through bit masking for the entry. Thus, referencing the exemplary embodiment described above, if the source data is a photo, the category value is 0x01010000, and, if the source data is a phone-book, the category value is 0x02030000. The "Data Location" entry represents the location where the source data is stored. The data collection unit 111 completes the source data table shown in FIG. 2, the source data table is transferred to the post-processing management unit 120.

The condition collection unit 112 stores condition data inputted by the user in a database and transfers the condition data to the post-processing management unit 120. The condition collection unit 112 classifies and stores portions that defme the search condition of the inputted condition data in condition tables, for example, for four items: "Who," "Where," "When" and "What" and stores portions that specify the predetermined operation of the inputted condition data in a condition table for an item "How." The condition collection unit 112 transfers these tables to one combined condition table, and generates a combination condition to be transferred to the post-processing management unit 120. Thus, the search condition is obtained by extracting data corresponding to "Who," "Where," "When" and "What" from the condition data inputted by the user and encoding the extracted data, and the predetermined-operation identification information is obtained by extracting data corresponding to the item "How" from the condition data input by the user and encoding the extracted data. Although described above as Who, Where, When, What and How, aspects need not be limited thereto such that other categories or descriptions of data may be used, and such categories may be set or defined during development of an application or mobile terminal or may be set or defmed by a user.

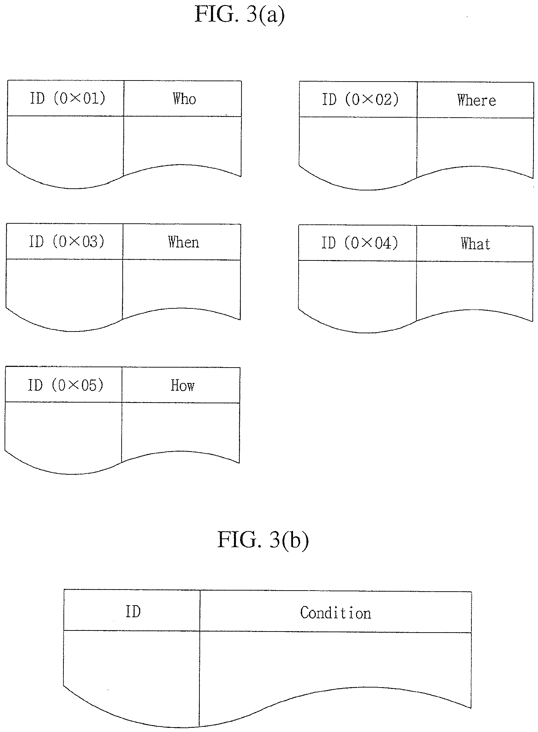

Referring to FIG. 3 (a), the condition data inputted by the user is divided and stored in the condition tables for Who/Where/When/What/How ("4W1H tables") depicted in FIG. 3 (a). The condition collection unit 112 transfers the content stored in the 4W1H tables shown in FIG. 3 (a) into one combined condition table shown in FIG. 3 (b) and stores the combination condition to be finally transferred to the post-processing management unit 120.

By way of example, and again referring to the example above, if the condition data set by a user is "The user sends stored photos to a homepage upon arriving home," the item "Where" is "home" and "homepage." Thus, "ID: 0x00020001 and GPS data of home" may be stored in a first row of the table for the item "Where" and "ID: 0x00020002 and homepage access address" may be stored in a second row thereof. The item "What" is "photo data" and therefore "ID: 0x00040001 0x01010000'" may be stored in the table for the item "What." The item "How" is "to send to the homepage" and "ID: 0x00050001 sent to 0x0002002" may be stored in the table for the item "How."

Referring back to FIG. 1, the condition collection unit 112 stores the data in the 4W1H tables, allocates IDs, combines the tables into a single table, and generates the combined condition table. As a result, the combined condition table to be transferred to the post-processing management unit 120 may be "ID: 0x00000001(0x0002001 0x00040001 0x00050001)" and may be transferred to the post-processing management unit 120. In an exemplary embodiment, the content of the combined condition table may be transferred to the post-processing management unit 120 contemporaneously with the storage of data in the 4W1H tables.

The post-processing management unit 120 manager and stores the source data and the combination condition received from the data collection unit 111 and the condition collection unit 112 in one content table, generates user content, and applies a content ID to the user content. In addition, the post-processing management unit 120 transfers the search condition (e.g., ID: 0x0001xxxx to 0x0003xxxx) of the user content and a content ID matched thereto to the condition variation monitoring unit 130 to monitor the search condition. If the content ID is returned from the condition variation monitoring unit 130 because the combination condition is satisfied, the post-processing management unit 120 automatically processes the user content.

The condition variation monitoring unit 130 is an observer that waits until an actual condition satisfies the search condition while it monitors whether the actual condition of the mobile communication terminal satisfies a specific search condition. For example, the condition variation monitoring unit 130 monitors whether the actual condition of the mobile communication terminal matches the search condition (e.g., ID: 0x0001xxxx to 0x0003xxxx) received from the post-processing management unit 120. If the two conditions match, the condition variation monitoring unit 130 informs the post-processing management unit 120 that the two conditions match, provides the content ID of the matched searched condition, and then enters a state of monitoring conditions again.

If the actual condition of the mobile communication term satisfies the search condition, the post-processing management unit 120 processes the source data of the previously stored user content and executes an operation (data transmission, etc.) suitable for the predetermined-operation identification information. The predetermined operation executed by the post-processing management unit 120 may be at least one of data transmitting, data generating, data editing, data storing, data uploading, data receiving, or data converting operation or combinations thereof. It will be understood that for the purposes of this disclosure, "at least one of" will be interpreted to mean any combination of the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ).

Thus, the mobile communication terminal performs the pre-work operation if a condition is satisfied, using the data collection unit 111 and the condition collection unit 112 to determine the condition and store data, monitors whether the condition is satisfied using the condition variation monitoring unit 130, and collects data and performs the predetermined operation specified by the pre-work operation using the post-processing management unit 120. The mobile communication terminal may continuously or intermittently monitor whether the conditions are satisfied. The operation of the mobile communication terminal will now be described with reference to exemplary embodiments below. These examples are presented for clarity and the present disclosure is not limited by the examples provided.

First, a user A takes photos using an exemplary mobile communication terminal while traveling, comments on the photos, and stores the photos and the comments. The mobile communication terminal converts the photos, the comments written by the user, and global positioning system (GPS) data of the picture location into data formats (e.g., titles, photos, comments, and maps of positions where the photos are taken) established by the mobile communication terminal and stores the converted photos, comments and GPS data. If the user A sets a condition, for example: "Perform uploading function if Wi-Fi is accessed," the mobile communication terminal uploads all data in the form of text and images and uploads a position where the photos are stored and comments thereof to a user's webspace and transfers the position and the comments to followers, if the user's mobile communication terminal accesses a Wi-Fi® network, for example, at a coffee shop.

Second, a user B finds moving images and photos of a colleague C, which were taken at a department dinner, in an exemplary mobile communication terminal after work. The user B puts the data into one folder and sets conditions: "1) if the GPS data corresponds to that of the office, 2) if the colleague C approaches the user, and 3) the data of the folder is transmitted to the terminal of the colleague C." These conditions and data are stored in the mobile communication terminal in a predetermined data format. The next day, if the user B goes to the office and meets the colleague C, the mobile communication terminal transmits the data stored in the folder to an external memory of the terminal of the colleague C and provides a notification that the data has been transmitted in the form of a text message.

Third, a user D reads an "e-book" in an exemplary mobile communication terminal while going to his office. The user D underlines his favorite sentences in the e-book. In addition, the user D underlines desired content using the mobile communication terminal while surfing the Internet. Assume that the following conditions are set: "1) if the backlight of the terminal is turned off, if there is an underlined sentence in the recently read sentences and 2) if underlined sentences are uploaded to a user's webspace, for example, Twitter® and are stored in a memory card of the mobile communication terminal." If the user D underlines a sentence, the mobile communication terminal temporarily stores the underlined sentence in a predetermined data format. When the user D gets on the subway, the backlight of the mobile communication terminal is turned off, and the stored data is uploaded to Twitter® through a communication network and is transmitted to an external memory of the mobile communication terminal in the form of a text file.

Fourth, a user E who goes shopping receives card and cash receipts in the form of text message. The user E sets the following conditions: "1) if the user is located near his/her home (determined, for example, using GPS data) and the user's wireless sharing device is accessed, 2) the card and cash receipt in the message is transmitted to a housekeeping account book on the user's home computer." The mobile communication terminal checks whether or not the received message is a card or cash receipt, if the message is received and stores the receipt in an acceptable data format. If the user E completes shopping and returns home, the mobile communication terminal stores the details of expenditures in the housekeeping account book of the computer of the user E through the wireless sharing device.

Fifth, a user F selects conditions: "1) if the user goes to a baseball field (determined, for example, using GPS data), 2) the user's cheering song is transmitted to fans of the Doosan Bears." The user F stores the cheering song of the day in mp3 format before going to the baseball field. The exemplary mobile communication terminal stores the above-described conditions and the music file in, for example, mp3 format as data. When the user F arrives at the baseball field, the mobile communication terminal searches for terminals having the name "the Doosan Bears" among Bluetooth devices capable of being paired, and transmits the cheering song of the day in the mp3 format to the searched terminals.

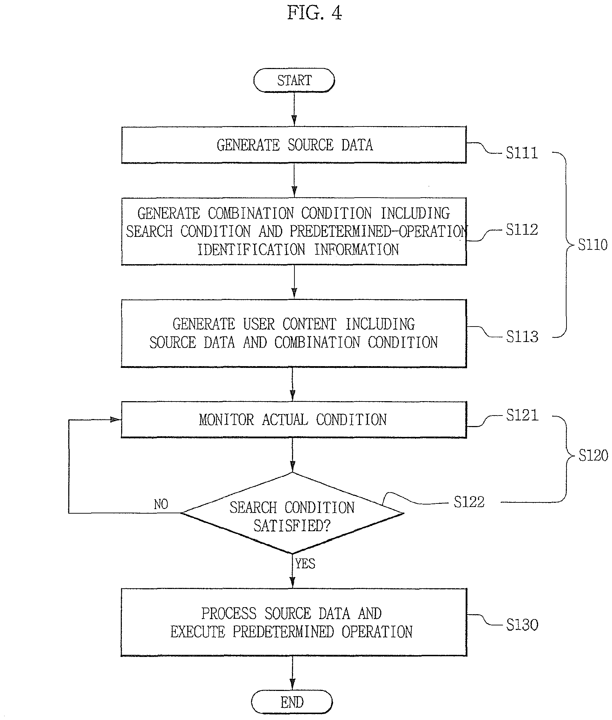

FIG. 4 is a flowchart depicting an illustrative method for processing content of a mobile communication terminal according to an exemplary embodiment. The method can be largely divided into pre-work operations of operation S110, condition detecting operations of operation S120, and a post-processing operation of operation S130.

In the pre-work operations of operation S110, an exemplary mobile communication terminal of the present disclosure generates source data using the data collection unit 111 and stores the data source in a table in operation S111. In operation S112, the mobile communication terminal collects condition data using the condition collecting unit 112, generates a combination condition in a table, and transfers the combination condition to the post-processing management unit 120. The combination condition may include a search condition corresponding to "Who," "Where," "When" and "What" and predetermined-operation identification information corresponding to "How." In operation S113, the post-processing management unit 120 stores the source data and the combination condition received from the data collection unit 111 and the condition collection unit 112, respectively, into one content table, generates user content, and assigns a content ID to the user content

The condition detecting operations of operation S120 includes operation S121, in which the condition variation monitoring unit 130 of the mobile communication terminal monitors whether the actual condition of the mobile communication terminal satisfies the search condition set in operation S110.

If the actual condition of the mobile communication terminal satisfies the search condition, in operation S122, the post-processing management unit 120 processes the source data generated in operation S110 and performs an operation suitable for the predetermined-operation identification information.

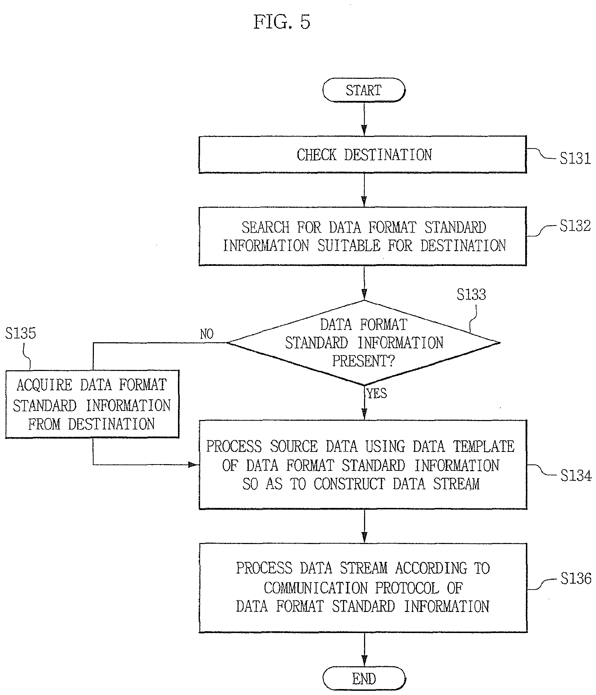

FIG. 5 is a flowchart depicting an illustrative method for processing source data and executing a predetermined operation according to an exemplary embodiment. By way of example and for illustrative purposes, it is assumed that the predetermined operation is an operation of transmitting data to a destination set by the user.

In the pre-work operation S110 of FIG. 4, the user inputs source data and a transmission target to an exemplary mobile communication terminal and sets data transmission as the predetermined operation. For example, the source data is "0x0004xxx: photo, text, positional information, etc.," and the transmission target is "0x0005xxx: URL, IP address, telephone number, etc." During the execution of the predetermined operation, a data stream having a form required by the transmission target is output. During actual transmission, a transmitter of the exemplary mobile communication terminal transmits the data stream using a suitable Internet protocol.

Referring to FIG. 5, in operation S131, the post-processing management unit 120 of the mobile communication terminal checks the set transmission target and identifies a destination (e.g., 0x0002xxxx) to which the data stream will be transmitted. The destination may be a certain communication terminal for achieving the user's purpose, such as a mobile phone, a computer, a web server or any other device.

In operation S132, the post-processing management unit 120 determines whether or not data format standard information necessary for transmitting or receiving data to or from the destination is present, and acquires the data format standard information.

The data format standard information includes a data template defining the structure of the data stream transmitted between the mobile communication terminal and the destination and specifies which communication protocol (e.g., HTTP, FTP, UPnP, etc.) should be used. The data format standard information may be stored in the mobile communication terminal in a certain readable format (e.g., XML, Script, etc.), may be located outside the mobile communication terminal (e.g., on the Internet, etc.), or may be directly defined by the user as necessary depending on situations.

If the data format standard information is not present in operation S133 (i.e., if the data format standard information is not found in the terminal), in operation S135, a process of accessing the destination through the Internet and requesting and acquiring the data format standard information may be further included. Operation S135 may be performed by the mobile communication terminal. However, aspects are not limited thereto such that a process of requesting that the user defme the information or a process of asking that the user for a method of acquiring the information (e.g. by an access path such as a URL) may be further included in operation S315.

In operation S134, the post-processing management unit 120 extracts the data template defining the structure of a specific data stream from the data format standard information. The post-processing management unit 120 processes (e.g., edits, arranges, adds supplementary data, etc.) the source data to be transmitted based on the extracted data template and completes the construction of the data stream in a form suitable for the transfer format specified.

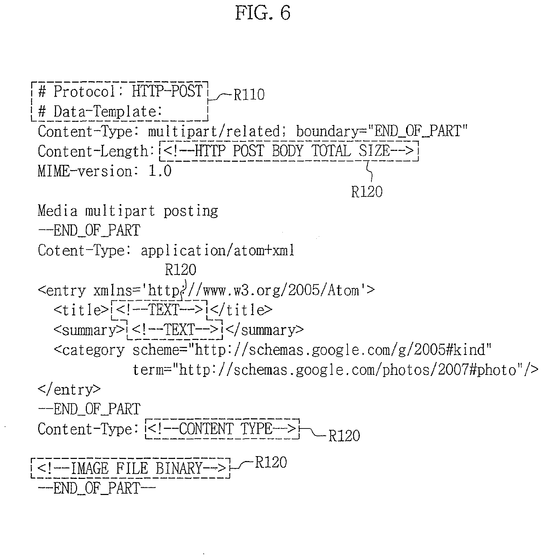

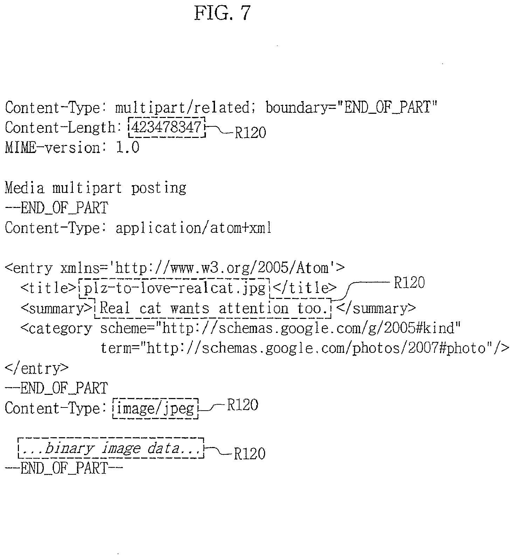

FIG. 6 depicts an exemplary data format standard information received by an exemplary mobile communication terminal. In FIG. 6, the location of the transfer protocol is highlighted in box R1 10 and areas in which source data will be updated are highlighted in boxes R120. FIG. 7 depicts an exemplary constructed data stream for transmission based on the exemplary data format standard information of FIG. 6. The construction of the data stream to be transmitted to a destination is completed by registering the actual source data of S110 into the areas of boxes R120 of the data template of FIG. 6.

In an error state in which the specified source data does not match the data template used for communication with the destination, the mobile communication terminal may display an indicator of the error state on a screen to inform the user, automatically exclude the source data, ask the user whether the source data should be excluded, automatically cancel the data transmitting process, or ask the user whether the data transmitting process should be cancelled. An error state may occur, for example, if an Internet site of a company A can accept only text but a user sets transmission of a moving image to the site or if the user sets transmission of a 9999-byte text where his/her Twitter account allows transmission of only up to 140 letters.

It will be understood by those of skill in the art that the exemplary mobile communication terminal taught herein, may, inform a transmitter of the communication protocol identified in the data format standard information. The transmitter may be integrated into the mobile communication terminal or independent from the exemplary mobile communication terminal and connected thereto in any suitable manner. After, at least a portion of the construction or the transmission preparation of the transmitter is completed, the transmitter starts the transmission of the data stream generated in the operation S134. It will further be understood by those of skill in the art, that this process may be dynamical based on the transmitter or the transfer protocol or may be performed by activating a predefined transmission program or procedure.

According to exemplary embodiments, the mobile communication terminal and a method for processing content thereof may automatically generates user content using the data collection unit 111 and the post-processing management unit 120 connected to the data collection unit 111, check the structure of the data template when the condition is satisfied, and regenerate a data stream in a format necessary for the destination. In addition, the mobile communication terminal, according to exemplary embodiments, reconfigures the data stream generated by the post-processing management unit 120 to suit the transfer protocol and transmits the data stream to the destination. Thus, a user's burden is decreased and user convenience is increased.

According to aspects of the invention, the user or the engineer may transmit or store content to or at a desired location at a desired time in a desired format if the user sets a desired condition at a convenient time or an engineer sets a desired condition in an application. Thus, a user can process content at a desired time in a desired format based on a predetermined condition.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A mobile communication terminal and a method of processing content thereof are disclosed. The terminal and method analyze inputted commands to generate condition data used to automatically executed the inputted commands when the condition for the command occurs. The mobile communication terminal includes a pre-work setting unit to set a combination condition which includes a search condition, a predetermined-operation identification information, and source data; a condition variation monitoring unit to monitor whether an actual condition satisfies the search condition, and a post-processing management unit to process the source data, if the actual condition satisfies the search condition, and to execute a predetermined operation according to the predetermined-operation identification information, if the actual condition satisfies the search condition.

## Claims

1. A mobile communication terminal comprising:
a pre-work setting unit adapted to set a combination condition, the combination condition comprising a search condition, predetermined-operation identification information, and source data;
a condition variation monitoring unit adapted to monitor whether an actual condition satisfies the search condition; and
a post-processing management unit adapted to process the source data if the actual condition satisfies the search condition and to execute a predetermined operation according to the predetermined-operation identification information.

2. The mobile communication terminal according to claim 1, wherein the post-processing management unit generates user content, assigns a content ID to the generated user content, transfers the combination condition and the content ID to the condition variation monitoring unit, the user content preferably comprising the source data and the combination condition.

3. The mobile communication terminal according to claim 2, wherein if the content ID is returned from the condition variation monitoring unit the post-processing management unit processes the generated user content.

4. The mobile communication terminal according to any of claims 1 to 3,
wherein the pre-work setting unit further comprises:
a data collection unit adapted to classify the source data into categories and to store the source data in a table; and
a condition collection unit adapted to analyze condition data to generate condition tables for the condition data to combine the generated condition tables, and to store one combined condition table,
the condition tables preferably being for "Who," "Where," "When," "What," and "How."

5. The mobile communication terminal according to any of claims 1 to 4, wherein the search condition is obtained by extracting data corresponding to "Who," "Where," "When" and "What" from a condition data and encoding the extracted data.

6. The mobile communication terminal according to any of claims 1 to 5, wherein the predetermined-operation identification information is obtained by extracting data corresponding to "How" from a condition data and encoding the extracted data.

7. The mobile communication terminal according to any of claims 1 to 6, wherein the predetermined operation executed by the post-processing management unit is an operation of transmitting data to a destination.

8. The mobile communication terminal according to claim 7, wherein the combination condition of the pre-work setting unit further comprises a transmission target; and the post-processing management unit is adapted to check the transmission target to identify a destination, to search for data format standard information suitable for the destination, to process the source data based on a data template extracted from the data format standard information to configure a data stream, and to transmit the data stream to the destination according to a communication protocol specified in the data format standard information,
wherein, if the data format standard information is not found in the terminal, then the data format standard information preferably is obtained by accessing the destination through the Internet.

9. The mobile communication terminal according to any of claims 1 to 8, wherein the predetermined operation executed by the post-processing management unit is at least one of data transmitting, data generating, data editing, data storing, data uploading, data receiving or data converting operation or combinations thereof.

10. A method for processing content of a mobile communication terminal, the method comprising:
performing a pre-work operation of setting a combination condition wherein the combination condition comprises source data, a search condition and predetermined-operation identification information;
performing a condition detecting operation of monitoring whether an actual condition satisfies the search condition; and
if the actual condition satisfies the search condition, performing a post-processing operation of processing the source data and executing an operation according to the predetermined-operation identification information.

11. The method according to claim 10, wherein the pre-work operation further comprises:
classifying the source data into categories and storing the source data in a table;
analyzing condition data;
generating condition tables for "Who," "Where," "When," "What" and "How" from the condition data;
combining the generated condition tables; and
storing the generated condition tables in one combined condition table.

12. The method according to claim 10 or 11, wherein the post-processing operation is a data transmitting, data generating, data editing, data storing, data uploading, data transmitting, data receiving or data converting operation or combinations thereof.

13. The method according to any of claims 10 to 12, wherein the post-processing operation further comprises:
checking a transmission target to identify a destination wherein the transmission target is provided in the combination condition;
searching for data format standard information for data communication with the destination;
extracting a data template defining the structure of a data stream used for data communication with the destination from the data format standard information;
processing the source data based on the data template to configure a data stream suitable for data communication with the destination; and
transmitting the data stream to the destination according to a communication protocol specified in the data format standard information,
wherein the data format standard information preferably is stored in an internal memory in a readable format, stored in an external device in a readable format, or is defined by a user.

14. The method according to claim 13, wherein, if the data format standard information is not found, at least one of an operation of requesting the data format standard information from the destination and acquiring the data format standard information, making a request for defining the data format standard information to a user, and an operation of asking a user how to acquire the data format standard information is executed.

15. The method according to claim 13 or 14, wherein the post-processing opertation further comprises: if the transmitted source data does not match the data template used for data communication with the destination and an error message is received, then at least one of an operation of displaying an indicator of an error state to a user, automatically excluding the source data, asking a user whether the source data should be excluded, automatically cancelling data transmission, and asking a user whether data transmission should be cancelled is executed.

16. A method for generating a search condition from source data, the method comprising:
generating subcategories for condition data based on "who" data, "where" data, "when" data and "what" data;
analyzing source data to identify "who" data and storing "who" data in the subcategory for "who" data if "who" data is identified in the source data;
analyzing source data to identify "where" data and storing "where" data in the subcategory for "where" data if "where" data is identified in the source data;
analyzing source data to identify "when" data and storing "when" data in the subcategory for "when" data if "when" data is identified in the source data;
analyzing source data to identify "what" data and storing "what" data in the subcategory for "what" data if "what" data is identified in the source data; and
combining the identified "who" data, "where" data, "when" data and "what" data into a search condition.
